# EUROPÄISCHE PATENTSCHRIFT

(11) **EP 1 763 645 B1**
(45) Veröffentlichungstag und Bekanntmachung des Hinweises auf die Patenterteilung: **25.04.2012**
(21) Anmeldenummer: 05748339.8
(22) Anmeldetag: 01.06.2005
(51) Int. Cl.: F16G 13/04

(54) **ZAHNKETTE**
SILENT CHAIN
CHAINE DENTEE

(30) Priorität: 06.07.2004 US 585624 P
(43) Veröffentlichungstag der Anmeldung: 21.03.2007
(73) Patentinhaber: Schaeffler Technologies AG & Co. KG, 91074 Herzogenaurach (DE)
(72) Erfinder: BOTEZ, Lucian, Novi, Michigan 48377 (US); HAHN, Klaus, 90768 Fürth (DE); SCHUSEIL, Bolko, 91325 Adelsdorf (DE)
(86) Internationale Anmeldenummer: PCT/EP2005/005857
(87) Internationale Veröffentlichungsnummer: WO 2006/002722

(56) Entgegenhaltungen:
- EP-A- 0 384 076
- US-A- 4 463 550

## Beschreibung

### Gebiet der Erfindung

Die Erfindung betrifft eine Zahnkette, bestehend aus über Verbindungsglieder miteinander verbundenen, Verbindungsdurchbrechungen aufweisenden Laschen, wobei an jedem Verbindungsglied zwei äußere Führungslaschen, diesen folgend wenigstens zwei für einen kraftübertragenden Angriff an einem gezahnten Kettenrad zahnartig profilierte Schwenklaschen und zwischen diesen wenigsten eine Verbindungslasche angeordnet sind, wobei die Führungslaschen und die wenigstens eine Verbindungslasche im Presssitz und die wenigstens zwei Schwenklaschen schwenkbar am Verbindungsglied angeordnet sind.

### Hintergrund der Erfindung

Solche Zahnketten, häufig auch invertierte Zahnketten genannt, sind bekannt und kommen vornehmlich im Fahrzeugbau zum Einsatz, wo sie als Steuerketten dienen. Eine solche Kette ist beispielsweise aus DE 689 18 842 T2 bzw. der zugehörigen europäischen Patentschrift EP 0 384 076 B1 bekannt, ferner ist aus US 6,485,385 und US 4,906,224 zu verweisen. Die einzelnen Laschen werden über einen Verbindungsstift oder -bolzen verbunden. Sie weisen jeweils zwei Verbindungsdurchbrechungen auf, die vom Verbindungsbolzen durchsetzt sind. Außenseitig angeordnet sind zwei Führungslaschen, die im Presssitz und damit unschwenkbar im Bereich der äußeren Enden des Verbindungsbolzens aufsitzen. Diesen folgen wenigstens zwei Schwenklaschen, die über eine entsprechend ausgelegte Spielpassung schwenkbar am Verbindungsbolzen aufgenommen sind. Zwischen diesen wiederum befindet sich wenigstens eine Verbindungslasche, die wie auch die äußeren Führungslaschen ebenfalls im Presssitz und damit unschwenkbar am Verbindungsbolzen angeordnet ist. Die Führungslaschen und die wenigstens eine Verbindungslasche liegen - in Seitenansicht - hintereinander, während die Schwenklaschen versetzt zu diesem Laschenpaket angeordnet sind. Der Aufbau einer solchen invertierten Zahnkette ist an und für sich bekannt und muss nicht näher beschrieben werden.

Im Einbauzustand wirkt die Zahnkette mit wenigstens zwei Kettenrädern, über die sie geführt ist, und denen entsprechende Antriebs- oder sonstige Aggregate zugeordnet sind, zusammen. Über sie erfolgt der Kraftübertrag auf ein oder von einem Kettenrad. Zu diesem Zweck sind die einem Kettenrad zugewandten Flanken der Schwenklaschen zahnartig profiliert, das heißt, an ihnen sind entsprechende Eingriffszähne ausgebildet, die mit entsprechenden Zähnen des jeweiligen Kettenrades kämmen. Ausschließlich über diese Zahnflächen erfolgt der Kraftübertrag bei derartigen, z.B. aus DE 689 18 842 T2 bekannten Zahnketten.

Aus der US 4.463.550 ist eine Zahnkette bekannt bei denen paarweise zusammengefügte Verbindungslaschen beidseitig mit einer Einheit, bestehend aus jeweils drei Schwenklaschen zusammenwirken, die außenseitig jeweils einer Führungslasche zugeordnet sind. Der Aufbau dieser Zahnkette umfasst weiterhin Verbindungslaschen, deren Breite die Schwenklaschenbreite übertrifft. Die Schwenklaschen sind über eine Buchse verbunden, durch die der Bolzen geführt ist.

Aufgrund des eingangs beschriebenen Aufbaus der in Rede stehenden Zahnketten ist die kraftübertragende Fläche im Bereich der Zähne relativ schmal, nachdem wie beschrieben ausschließlich die Schwenklaschen gezahnt sind. Allein über diese Flächen erfolgt die gesamte Kraftübertragung und damit die gesamte Lastverteilung, so dass es zu beachtlichen Belastungen und Lastspitzen kommt. Dies wirkt sich nachteilig auf den Verschleiß der Zahnkette und der Kettenräder aus, auch wird hierüber die sich im Laufe der Zeit einstellende Längung der Kette nachteilig beeinflusst.

### Zusammenfassung der Erfindung

Der Erfindung liegt damit das Problem zugrunde, eine Zahnkette anzugeben, die eine bessere Lastverteilung während des Kraftübertrags am Kettenrad ermöglicht.

Dieses Problem ist durch die Merkmale des Anspruchs 1 gelöst.

Bei der erfindungsgemäßen Zahnkette sind nicht nur die Schwenklaschen, sondern auch die wenigstens eine Verbindungslasche zahnartig profiliert, das heißt, der Kraftübertrag erfolgt nicht nur über die Schwenklaschen, sondern auch über die verbindungslasche. Hieraus resultiert, dass die gesamte Zahnfläche, die mit der Zahnfläche des gegenüberliegenden, kettenradseitigen Zahns zusammenwirkt, deutlich größer als bei den eingangs genannten Zahnketten des Standes der Technik ist, das heißt, die gesamte anliegende Last wird auf eine größere Fläche verteilt, was vorteilhaft ist.

Der Umstand, dass bei der erfindungsgemäßen Zahnkette sowohl die Führungslaschen als auch die wenigstens eine Verbindungslasche im Presssitz und damit unschwenkbar am Verbindungsbolzen aufsitzen, und lediglich die Schwenklaschen schwenkgelagert sind, führt dazu, dass eine Verbiegung des Verbindungsbolzens, wie er bei Zahnketten, bei denen die mittlere Verbindungslasche ebenfalls schwenkgelagert ist, sehr stark eingeschränkt wird. Hierdurch wird einer Deformation während des Lastbetriebs vorteilhaft entgegengewirkt. In Verbindung mit dem zusätzlichen erfindungsgemäßen Vorteil der optimierten Lastverteilung infolge der größerflächigen Zahn- bzw. Kraftübertragungsfläche ergibt sich insgesamt eine im Hinblick auf die Lebensdauer deutlich verbesserte Zahnkette, die wesentlich geringeren plastischen bzw. elastischen Deformationen während des Betriebs unterworfen ist als bisher bekannte Zahnketten.

Die Zahnprofilierung der Verbindungslaschen sollte erfindungsgemäß derart sein, dass ein gemeinsamer Angriff am Kettenrad zusammen mit der Zahnprofilierung der Schwenklaschen zumindest dann erfolgt, wenn beide vollständig in die Kettenzähne eingreifen. Aufgrund der versetzten Anordnung der Schwenklaschen und der Verbindungslasche zueinander und dem Umstand, dass die Schwenklaschen bezüglich der Verbindungslasche beim Auflaufen auf das Kettenrad verschwenkt werden, sollte das Design der Zähne der Verbindungslaschen so gewählt werden, dass unter Berücksichtigung dieses Verhaltens bzw. der Positionsänderung der Schwenklaschen zur Verbindungslasche eine gemeinsame Anlage der laschenseitigen Zähne am Kettenradzahn möglichst frühzeitig, am besten bereits beim Auflaufen auf das Kettenrad gegeben ist, um während der gesamten Zeit der Kraftübertragung die maximale Anlagefläche zu realisieren. Die jeweiligen Laschen greifen nur mit ihren äußeren Zahnflanken am Kettenrad an, nicht aber mit den Zahnlückenprofilen. Aufgrund der versetzten Anordnung der Schwenklaschen zur Verbindungslasche kommen beim Auflaufen auf das Ketterad zuerst die Flanken der Schwenklaschen und anschlie-βend die Flanke der Verbindungslasche in Kontakt mit dem Kettenrad, sind beide aufgelaufen und in Kontakt mit dem Kettenrad wird die Last auf beide verteilt. Die optimale Lastverteilung ergibt sich also in dem Moment, wenn - bezogen auf ein Kettenglied - sowohl die Schwenklaschen als auch die Verbindungslasche aufgelaufen sind.

Eine vorteilhafte Weiterbildung der Erfindung sieht vor, dass die Verbindungsdurchbrechungen der Führungslaschen und der wenigstens einen Verbindungslasche die gleiche Teilung und einen derartigen Durchmesser aufweisen, dass in Verbindung mit dem Verbindungsglied, also dem Bolzen oder Stift ein Presssitz realisiert ist, während die Verbindungsdurchbrechungen der wenigstens zwei Schwenklaschen eine geringere Teilung bei größerem Durchmesser aufweisen. Die Verbindungsdurchbrechungen der Führungslaschen und der wenigstens einen Verbindungslasche fluchten also miteinander, und ein Presssitz wird realisiert. Demgegenüber ist die Teilung der Verbindungsdurchbrechungen der wenigstens zwei Schwenklaschen etwas geringer. Dies führt dazu, dass diese zwar über eine Spielpassung schwenkbar am Verbindungsbolzen gehaltert sind, jedoch liegen die Ränder der jeweiligen Durchbrechung infolge der geringeren Teilung und des etwas größeren Durchmessers an einer Seite am Verbindungsbolzen an. Das heißt, der Verbindungsbolzen besitzt zur Innenwandung der Verbindungsdurchbrechung etwas Spiel, jedoch ist infolge der geringeren Teilung in einem Punkt eine Anlage realisiert. Das heißt, im Falle einer anliegenden Last wird der Verbindungsbolzen auch an den Schwenklaschen unterstützt, was einer lastbedingten Deformation ebenfalls entgegenwirkt.

Häufig werden die in Rede stehenden Laschen durch Stanzen hergestellt. Hierbei ergeben sich im Zahnbereich und im Bereich der Verbindungsdurchbrechungen herstellungsbedingt kleine Abbruchkanten, die den am Zahnende realisierten Zahndurchmesser und damit die Auflageflächen der Zahnflanken am Kettenrad sowie die Auflageflächen der Schwenklaschen am Verbindungsbolzen etwas verschmälern. Je mehr Schwenklaschen und Verbindungslaschen verwendet werden würden, um so größer würde diese abbruchbedingte Flächenverkleinerung, weshalb eine vorteilhafte Weiterbildung der Erfindung vorsieht, die Breite der Schwenklaschen und der Verbindungslasche im Vergleich zu bekannten Zahnketten, bei denen deren Breite im Wesentlichen der Breite der Führungslaschen entspricht, zu vergrößern, beispielsweise auf wenigstens das 1,5-fache, insbesondere wenigstens das 2-fache der Breite der Führungslaschen. Im Stand der Technik, z.B. aus der bereits beschriebenen DE 689 18 842 T2 sind auch mehrlaschige Ketten bekannt, bei denen jeweils zwei oder mehr Schwenklaschenpaare und ein oder mehr Verbindungslaschenpaare verwendet werden. Jede der Schwenklaschen weist die beschriebenen Kantenabbrüche auf, die sich infolge der paarweisen Anordnung addieren. Nachdem nun erfindungsgemäß breitere Laschen verwendet werden, besteht die Möglichkeit zur Teilereduktion, das heißt, es kann eine Kette mit annähernden gleichen Eigenschaften infolge des erfindungsgemäßen Kettenaufbaus realisiert werden, wobei wesentlich weniger Teile, nämlich im einfachsten Fall nur zwei Schwenklaschen sowie eine verbindungslasche und zwei Führungslaschen zum Einsatz kommen. Die Breite der jeweiligen Lasche sollte so gewählt sein, dass sich im Wesentlichen ähnliche Kontaktflächen im Bereich der Flanken und Durchbrechungen ergeben, wie bei bekannten mehrteiligen Ketten. Es ist also eine äußerst stabile Kette geringerer Masse und mit größerer Kompaktheit realisierbar, die in geringerer Zeit zusammengebaut werden kann, als dies für die in Rede stehenden Ketten des Standes der Technik gilt. Denn infolge der Einbindung der Verbindungslasche zur Kraftübertragung ist der Einsatz mehrerer Schwenklaschen wie bisher eben nicht mehr erforderlich. Dies schließt es natürlich nicht aus, mehrere Schwenklaschenpaare und Verbindungslaschenpaare zu verwenden, wenn eine sehr breite Kette gefordert wird. Die erfindungsgemäß erzielbaren Vorteile im Vergleich zu einer entsprechend breiten Kette des Standes der Technik bleiben jedoch nach wie vor gegeben.

Um dem Problem der Abbruchkanten so gut wie möglich zu begegnen ist vorgesehen, dass die wenigstens zwei Schwenklaschen und die wenigstens eine Verbindungslasche, die gemäß den Erfindungsausgestaltungen auch eine andere Bereite als jede Schwenklasche aufweisen, feingestanzt sind, so dass die möglichen Kantenabbrüche auf ein minimales Maß reduziert werden können.

### Kurze Beschreibung der Zeichnungen

- Fig. 1: zeigt eine Seitenansicht auf eine erfindungsgemäße Zahnkette,
- Fig. 2: zeigt eine Aufsicht im Schnitt auf die Zahnkette aus Fig. 1,
- Fig. 3: zeigt eine vergrößerte Schnittansicht im Bereich der Laschenverbindung,
- Fig. 4: zeigt eine Stirnansicht auf den Bereich der Laschenverzahnung,
- Fig. 5: zeigt eine detaillierte Seitenansicht der erfindungsgemäßen Zahnkette zur Darstellung der Verbindungsdurchbrechungsteilung, und
- Fig. 6: zeigt eine Detailansicht einer auf ein Kettenrad aufgelaufenen erfindungsgemäßen Zahnkette.

### Detaillierte Beschreibung der Zeichnungen

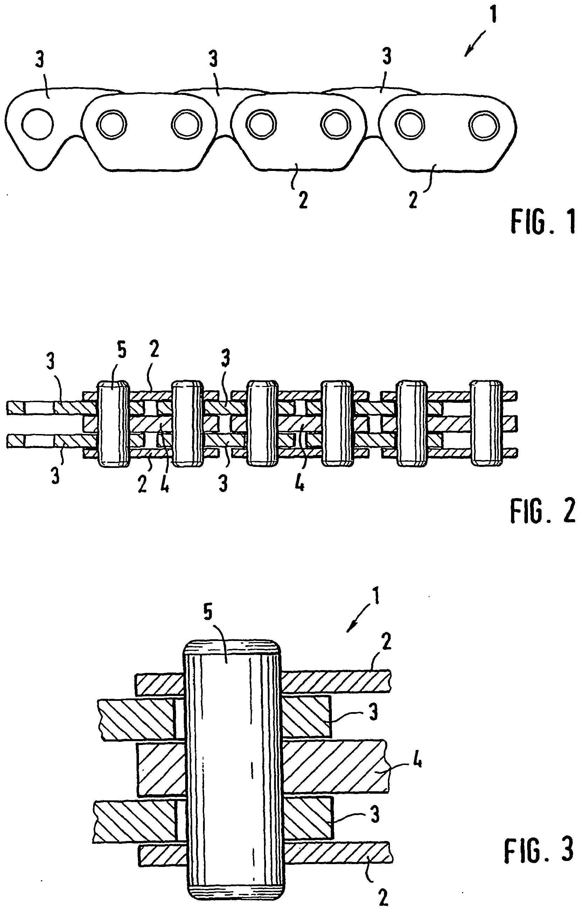

Fig. 1 zeigt eine erfindungsgemäße invertierte Zahnkette 1, bestehend aus seitlichen, außenseitig liegenden Führungslaschen 2, denen im gezeigten Ausführungsbeispiel zwei Schwenklaschen 3 folgen, zwischen denen wiederum eine Verbindungslasche 4 angeordnet ist. Wie der Schnittdarstellung gemäß Fig. 2 zu entnehmen ist, liegen die Führungslaschen 2 und die Verbindungslasche 4 im Wesentlichen deckungsgleich zueinander, während die Schwenklaschen versetzt dazu positioniert sind. Die Laschen selbst weisen entsprechende Verbindungsdurchbrechungen auf, die von einem Verbindungsglied 5 in Form eines Verbindungsbolzens oder Verbindungsstiftes, der zur Verbesserung der Verschleissfestigkeit und zur Vermeidung einer Verbiegung relativ dick ist, durchsetzt sind. Während die Teilung und die Durchmesser der jeweiligen Verbindungsdurchbrechungen der Führungslaschen 2 und der Verbindungslasche 4 so gewählt sind, dass beide im Presssitz auf dem Verbindungsglied 5 aufsitzen, mithin also nicht schwenkbar sind, ist der Durchmesser der Verbindungsdurchbrechungen der Schwenklaschen etwas größer gewählt, so dass sie in einer Spielpassung auf dem Verbindungsglied 5 aufgenommen sind. Die Teilung ist etwas kleiner gewählt, so dass die Durchbrechungsinnenwand in einem Punkt am Verbindungsglied 5 anliegt, worauf nachfolgend noch eingegangen wird.

Fig. 3 zeigt in vergrößerter Darstellung einen Ausschnitt aus der erfindungsgemäßen Kette 1 mit den bereits beschriebenen Elementen. Ersichtlich sind die beiden Schwenklaschen 3 und die Verbindungslasche 4 deutlich breiter als die Führungslaschen 2, bevorzugt doppelt so breit, um eine möglichst große, nachfolgend noch zu beschreibende Zahnauflagefläche zu realisieren. Bevorzugt haben die Schwenklaschen und die Verbindungslasche unterschiedliche Dicken und Außenkonturen, so dass sich die Teile beim Zusammenbau einfach sortieren lassen.

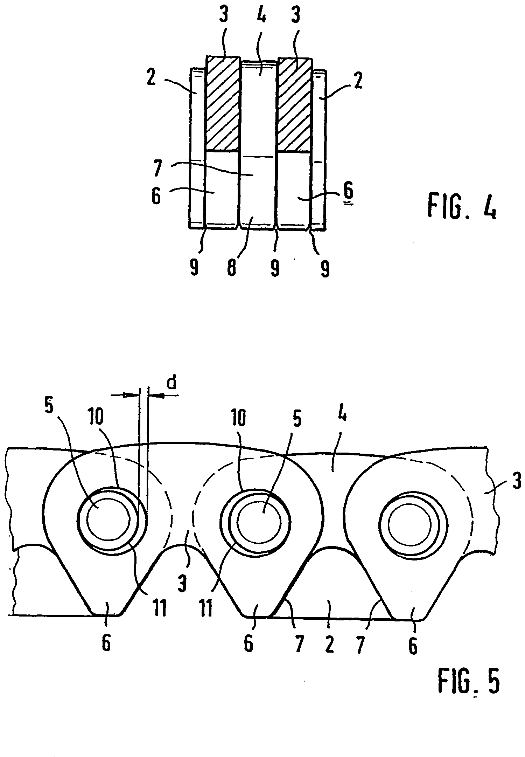

Diese Zahnprofilierung, die eine große Zahnauflagefläche ermöglicht, ist in den Fig. 4 bis 6 im Detail gezeigt. Ausgehend von Fig. 5 ist - unter Auslassung der vorderseitig aufgesetzten Führungslaschen - die Schwenklasche 3 gezeigt, an der zwei Zähne 6 vorgesehen sind, wie bei derartigen Zahnketten üblich. Gezeigt ist ferner die Verbindungslasche 4, auch an dieser sind zwei Zähne 7, die von den Zähnen 6 der Schwenklaschen verdeckt sind, ausgebildet.

Dieses Verzahnungsdesign führt dazu, dass - siehe die Stirnansicht in Fig. 4 - über die Zähne 6, 7 an den jeweiligen Zahnaußenflanken entsprechende Zahnauflageflächen 8 realisiert sind. Diese Zahnauflageflächen kommen aufgrund der versetzten Anordnung der Schwenklaschen 3 zu der Verbindungslasche 4 beim Auflaufen auf das Kettenrad nacheinander in Kontakt mit dem Kettenrad, weshalb in der Schnittansicht in Fig. 4 nur die Zahnauflagefläche 8 des Zahns 7 der Verbindungslasche 4 gezeigt ist, während von den geschnitten gezeigten Schwenklaschen 3 die nicht in Kontakt mit dem Kettenrad kommenden Zahninnenflanken zu sehen sind. Sind beide aufgelaufen, stehen sowohl Zahnflanken der Zähne 6 als auch die der Zähne 7, mithin also sowohl die Schwenklaschen 3 als auch die Verbindungslasche 4 kämmend und in kraftübertragendem Eingriff mit einem Zahn des Kettenrades stehen. Hierdurch erfolgt eine wesentlich bessere weil über eine größere Fläche erfolgende Lastverteilung.

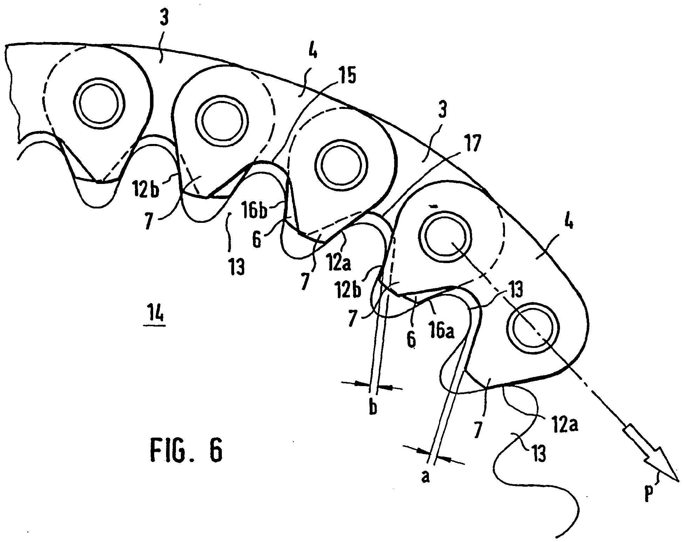

Aus Fig. 6 sind die Kontaktpunkte der jeweiligen Zahnaußenflanken der Zähne 6 und 7 der Schwenklaschen 3 und der Verbindungslasche 4 zu entnehmen. Die Kette wird in Richtung des Pfeils P bewegt. Die in Bewegungsrichtung zuvorderst gezeigte Verbindungslasche 4 liegt mit der vorderen Zahnaußenflanke 12a ihres Zahns 7 an der jeweiligen Zahnflanke des benachbarten Zahns 13 des Kettenrads 14 an, d.h. die Zahnaußenflanke 12a bildet die Zahnauflagefläche 8, wie sie bezüglich Fig. 4 beschrieben sind. Die am anderen Zahn befindliche Zahnflanke 12b steht nicht in Kontakt mit dem Kettenrad 14, sie hat geringes Spiel. Auch der Zahnzwischenraum 15 zwischen den beiden Zähnen 7 ist nicht in Kontakt mit dem Kettenrad, auch nicht die Innenflanken der Zähne 7. Diese sind ersichtlich dazu beabstandet, wie durch das Abstandsmaß a angezeigt. Der kraftübertragende Kontakt ist allein über die Zahnaußenflanke 12a gegeben. Bei umgekehrter Bewegungsrichtung läge dann die Zahnaußenflanke 12b am Kettenrad an, die Zahnaußenflanke 12a hat geringes Spiel.

Entsprechend steht auch die nachfolgende Schwenklasche 3 nur über die bei dieser Bewegungsrichtung die Zahnauflagefläche bildende vordere Zahnaußenflanke 16a des Zahns 6 mit der benachbarten Zahnflanke des Kettenradzahns 13 in Kontakt. Der Zahnzwischenraum 17 zwischen den Zähnen 6 sowie die Zahninnenflächen stehen auch hier nicht in Kontakt mit dem Kettenrad, wie durch das Abstandsmaß b angezeigt, auch hier hat die Zahnaußenflanke 16b geringes Spiel und greift nicht am Kettenrad 14 an. Bei umgekehrter Bewegungsrichtung aber stünde die Zahnflanke 16b in Kontakt mit dem Kettenrad und die Zahnflanke 16a liefe frei.

Die Form bzw. Kontur der Zähne 6, 7 sollte bevorzugt unter Berücksichtigung der Relativbewegung der Schwenklaschen 3 bezüglich der Verbindungslasche 4 während des Auflaufens auf und des Laufens um das Kettenrad gewählt sein. Es sollte sichergestellt sein, dass zumindest dann, wenn die Relativbewegung der Laschen zueinander nach dem Auflaufen auf das Kettenrad beendet ist, die maximale Auflagefläche realisiert ist. Die Fig. 4 bis 6 sind nur Prinzipdarstellungen, die die reale Zahnform der einzelnen Zähne nicht detailgenau wiedergeben.

Im Übrigen ergibt sich aus Fig. 4, dass die an den Kanten der Zähne 6, 7 herstellungsbedingt bestehenden Bruchkanten 9 infolge der relativ breiten Ausführung der Laschen die gesamte Fläche nur unwesentlich verkleinern, mithin also aufgrund der erfindungsgemäßen Verzahnung sowohl der Schwenklaschen 3 wie auch der Verbindungslasche 4 eine optimierte, große Kraftübertragungsfläche zur Verfügung steht.

Fig. 5 ist ferner zu entnehmen, dass die Durchgangsbohrungen 10 der Schwenklaschen 3 einen kleineren Abstand aufweisen, als die Durchgangsbohrungen 11 der Verbindungslasche 4 bzw. der Führungslaschen 2, die im Durchmesser so gestaltet sind, dass ein Presssitz mit dem Verbindungsbolzen realisiert wird, und in der Teilung gleich sind und in der Verbausituation miteinander fluchten. Der Durchmesser der Durchgangsbohrungen 10 ist, wie Fig. 4 deutlich zeigt, größer, so dass sich eine Spielpassung zum Verbindungsglied 5 hin ergibt. Der Teilungsabstand ist insgesamt um das Maß d reduziert. Dies führt dazu, dass nach der Montage das Verbindungsglied 5 an gegenüberliegenden Seiten der jeweiligen Verbindungsdurchbrechungen 10 der Schwenklaschen 3 anliegt, es ist also eine einseitige Spielpassung bzw. eine einseitige Anlage realisiert. Dies führt dazu, dass der Verbindungsbolzen nicht nur über den Presssitz der Führungslaschen und der Verbindungslasche abgestützt ist, sondern aufgrund des geringeren Teilungsabstands auch über die Schwenklaschen 3, was einer betriebsbedingten Längung entgegenwirkt.

An dieser Stellung ist darauf hinzuweisen, dass anstelle der in Fig. 2 gezeigten Ausführungsform mit zwei Schwenklaschen und einer Verbindungslasche auch für breite Ketten entsprechende Laschenpaare eingesetzt werden können. Alternativ besteht auch die Möglichkeit, beispielsweise drei Schwenklaschen und zwei Verbindungslaschen oder entsprechend Paare abwechselnd vorzusehen, wobei natürlich auch in diesem Fall die Verbindungslaschen mit Zähnen ausgeführt sind. Die Herstellung erfolgt insgesamt durch ein Feinstanzverfahren.

### Bezugszahlen

- 1: Zahnkette
- 2: Führungslaschen
- 3: Schwenklaschen
- 4: Verbindungslasche
- 5: Verbindungsglied
- 6: Zähne
- 7: Zähne
- 8: Zahnauflageflächen
- 9: Bruchkanten
- 10: Durchgangsbohrungen
- 11: Durchgangsbohrungen

## Patentansprüche

1. Zahnkette, bestehend aus über Verbindungsglieder (5) miteinander verbundenen, Verbindungsdurchbrechungen aufweisenden Laschen, wobei an jedem Verbindungsglied zwei äußere Führungslaschen (2), diesen folgend wenigstens zwei für einen kraftübertragenden Angriff an einem gezahnten Kettenrad (14) zahnartig profilierte Schwenklaschen (3) und zwischen diesen wenigsten eine Verbindungslasche (4) angeordnet sind, wobei die Führungslaschen und die wenigstens eine Verbindungslasche im Presssitz und die wenigstens zwei Schwenklaschen (3) unmittelbar schwenkbar am Verbindungsglied (5) angeordnet sind, und die wenigstens eine Verbindungslasche (4) eine einen kraftübertragenden Angriff am Kettenrad (14) ermöglichende zahnartige Profilierung (7) aufweist, wobei die Schwenklaschen (3) und die wenigstens eine Verbindungslasche (4) breiter als die seitlichen Führungslaschen (2) sind und zur Herstellung der_Schwenklaschen (3) und der Verbindungslasche (4) eine Feinstanzung vorgesehen ist.

2. Zahnkette nach Anspruch 1, **dadurch gekennzeichnet, dass** die Zahnprofilierung (7) der Verbindungslasche (4) derart ist, dass ein gemeinsamer Angriff am Kettenrad zusammen mit der Zahnprofillerung (6) der Schwenklaschen (3) zumindest dann erfolgt, wenn beide vollständig in die Kettenzähne eingreifen.

3. Zahnkette nach Anspruch 1 oder 2, **dadurch gekennzeichnet, dass** die Verbindungsdurchbrechungen (11) der Führungslaschen (2) und der wenigstens einen Verbindungslasche (4) die gleiche Teilung und einen solchen Durchmesser aufweisen, dass ein Presssitz am Verbindungsglied (5) realisiert ist, während die Verbindungsdurchbrechungen (10) der wenigstens zwei Schwenklaschen (3) eine geringere Teilung bei größerem Durchmesser aufweisen.

4. Zahnkette nach einem der vorangehenden Ansprüche, **dadurch gekennzeichnet, dass** lediglich zwei Schwenklaschen (3) und lediglich eine Verbindungslasche (4) vorgesehen sind.

5. Zahnkette nach einem der Ansprüche 1 bis 3, **dadurch gekennzeichnet, dass** drei oder mehr Schwenklaschen (3) und zwei oder mehr Verbindungslaschen (4) vorgesehen sind, die vorzugsweise einander abwechselnd angeordnet sind.

6. Zahnkette nach einem der Ansprüche 1 bis 3, **dadurch gekennzeichnet, dass** jeweils Paare von Schwenklaschen (3) und Verbindungslaschen (34) vorgesehen sind.

7. Zahnkette nach Anspruch 1 , **dadurch gekennzeichnet, dass** die Breite der Schwenklaschen (3) und der Verbindungslasche (4) wenigstens das 1,5-flache der Breite der Führungslaschen (2) beträgt.

8. Zahnkette nach Anspruch 7, **dadurch gekennzeichnet, dass** die wenigstens eine Verbindungslasche (4) unterschiedlich breit als jede Schwenklasche (3) ist.

9. Zahnkette nach einem der vorangehenden Ansprüche, **dadurch gekennzeichnet, dass** die Außenkontur der Verbindungslasche (4) unterschiedlich zu der Außenkontur der Schwenklasche (3) ist.

## Claims

1. Toothed chain, composed of plates which are connected to one another by means of connecting elements (5) and have connecting apertures, wherein two outer guide plates (2), following these at least two pivoting plates (3) of tooth-like profile for force-transmitting engagement on a toothed sprocket (14), and between said outer guide plates and pivoting plates at least one connecting plate (4), are arranged on each connecting element, the guide plates and the at least one connecting plate being in interference fit, and the at least two pivoting plates (3) being directly pivotably arranged on the connecting element (5), and the at least one connecting plate (4) having a tooth-like profiling (7) which permits force-transmitting engagement on the sprocket (14), the pivoting plates (3) and the at least one connecting plate (4) being wider than the lateral guide plates (2), and a fine stamping being provided for the production of the pivoting plates (3) and the connecting plate (4).

2. Toothed chain according to Claim 1, **characterized in that** the tooth profiling (7) of the connecting plate (4) is such that common engagement on the sprocket together with the tooth profiling (6) of the pivoting plates (3) is provided at least when said two profilings (6) and (7) both engage completely in the chained teeth.

3. Toothed chain according to Claim 1 or 2, **characterized in that** the connecting apertures (11) of the guide plates (2) and of the at least one connecting plate (4) have the same pitch and a diameter which is such that an interference fit with the connecting element (5) is provided, while the connecting apertures (10) of the at least two pivoting plates (3) have a relatively small pitch and a relatively large diameter.

4. Toothed chain according to one of the preceding claims, **characterized in that** only two pivoting plates (3) and only one connecting plate (4) are provided.

5. Toothed chain according to one of Claims 1 to 3, **characterized in that** three or more pivoting plates (3) and two or more connecting plates (4) are provided and are preferably arranged alternately to one another.

6. Toothed chain according to one of claims 1 to 3, **characterized in that** in each case pairs of pivoting plates (3) and connecting plates (4) are provided.

7. Toothed chain according to Claim 1, **characterized in that** the width of the pivoting plates (3) and of the connecting plate (4) is at least 1.5 times the width of the guide plates (2).

8. Toothed chain according to Claim 7, **characterized in that** the at least one connecting plate (4) is of a different width from each of the pivoting plates (3).

9. Toothed chain according to one of the preceding claims, **characterized in that** the outer contour of the connecting plate (4) is different from the outer contour of the pivoting plate (3).

## Revendications

1. Chaîne dentée constituée de flasques connectés les uns aux autres par le biais d'organes de liaison (5), présentant des orifices de liaison, dans laquelle sur chaque organe de liaison sont disposés deux flasques de guidage extérieurs (2), au moins deux flasques pivotants (3) suivant ceux-ci, à profil en forme de dent pour un engagement par transfert de force avec une roue à chaîne dentée (14) et entre ceux-ci, au moins un flasque de liaison (4), les flasques de guidage et l'au moins un flasque de liaison étant disposés dans un ajustement serré et les au moins deux flasques pivotants (3) étant disposés de manière à pouvoir pivoter directement sur l'organe de liaison (5), et l'au moins un flasque de liaison (4) présentant un profilage (7) en forme de dent permettant un engagement par transfert de force avec la roue à chaîne (14), les flasques pivotants (3) et l'au moins un flasque de liaison (4) étant plus larges que les flasques de guidage latéraux (2) et un découpage fin étant prévu pour la fabrication des flasques pivotants (3) et du flasque de liaison (4).

2. Chaîne dentée selon la revendication 1, **caractérisée en ce que** le profilage denté (7) du flasque de liaison (4) est tel qu'un engagement commun avec la roue à chaîne a lieu conjointement avec le profilage denté (6) des flasques pivotants (3), au moins lorsque tous deux viennent complètement en prise dans les dents de la chaîne.

3. Chaîne dentée selon la revendication 1 ou 2, **caractérisée en ce que** les orifices de liaison (11) des flasques de guidage (2) et de l'au moins un flasque de liaison (4) présentent la même répartition et présentent un diamètre tel qu'un ajustement serré soit réalisé sur l'organe de liaison (5), tandis que les orifices de liaison (10) des au moins deux flasques pivotants (3) présentent une plus petite répartition et un plus grand diamètre.

4. Chaîne dentée selon l'une quelconque des revendications précédentes, **caractérisée en ce que** seulement deux flasques pivotants (3) et seulement un flasque de liaison (4) sont prévus.

5. Chaîne dentée selon l'une quelconque des revendications 1 à 3, **caractérisée en ce que** trois ou plus de trois flasques pivotants (3) et deux ou plus de deux flasques de liaison (4) sont prévus, lesquels sont disposés de préférence en alternance les uns avec les autres.

6. Chaîne dentée selon l'une quelconque des revendications 1 à 3, **caractérisée en ce que** des paires de flasques pivotants (3) et de flasques de liaison (4) sont à chaque fois prévues.

7. Chaîne dentée selon la revendication 1, **caractérisée en ce que** la largeur des flasques pivotants (3) et du flasque de liaison (4) vaut au moins 1,5 fois la largeur des flasques de guidage (2).

8. Chaîne dentée selon la revendication 7, **caractérisée en ce que** l'au moins un flasque de liaison (4) a une largeur différente de chaque flasque pivotant (3).

9. Chaîne dentée selon l'une quelconque des revendications précédentes, **caractérisée en ce que** le contour extérieur du flasque de liaison (4) est différent du contour extérieur du flasque pivotant (3).
